# FASCICULE DE BREVET EUROPEEN

(11) **EP 3 094 505 B1**
(45) Date de publication et mention de la délivrance du brevet: **07.02.2018**
(21) Numéro de dépôt: 14808612.7
(22) Date de dépôt: 05.12.2014
(51) Int. Cl.: B60C 11/14, B60C 1/00, C08K 7/04, B29D 30/08, C08L 9/06, C08K 3/36

(54) **PNEUMATIQUE COMPORTANT UNE BANDE DE ROULEMENT A BASE D'UNE COMPOSITION DE CAOUTCHOUC COMPRENANT DES FIBRES DE CARBONE EX BRAI**
REIFEN MIT EINER LAUFFLÄCHE AUF DER BASIS EINER KAUTSCHUKZUSAMMENSETZUNG MIT EX-PITCH-KOHLENSTOFFASERN
TYRE COMPRISING A TREAD BASED ON A RUBBER COMPOSITION COMPRISING EX-PITCH CARBON FIBRES

(30) Priorité: 10.12.2013 FR 1362331
(43) Date de publication de la demande: 23.11.2016
(73) Titulaire: Compagnie Générale des Etablissements Michelin, 63000 Clermont-Ferrand (FR)
(72) Inventeur: ABAD, Vincent, F-63040 Clermont-Ferrand Cedex 9 (FR); HENNEBERT, Guillaume, F-63040 Clermont-Ferrand Cedex 9 (FR)
(74) Mandataire: Gandon-Pain, Sylvie
(86) Numéro de dépôt international: PCT/EP2014/076696
(87) Numéro de publication internationale: WO 2015/086449

(56) Documents cités:
- EP-A1- 2 546 074
- US-A1- 2013 319 589
- DATABASE WPI Week 201323 Thomson Scientific, London, GB; AN 2013-E24401 XP002728281, & JP 2013 057041 A (SUMITOMO RUBBER IND LTD) 28 mars 2013 (2013-03-28)
- DATABASE WPI Week 200767 Thomson Scientific, London, GB; AN 2007-712591 XP002728282, & JP 2007 216829 A (BRIDGESTONE CORP) 30 août 2007 (2007-08-30)
- DATABASE WPI Week 201176 Thomson Scientific, London, GB; AN 2011-N78688 XP002728283, & JP 2011 225682 A (SUMITOMO RUBBER IND LTD) 10 novembre 2011 (2011-11-10)

## Description

Le domaine de la présente invention est celui des pneumatiques, en particulier des bandes de roulement pour pneumatique.

Une performance particulièrement recherchée des pneumatiques est l'usure. La bande de roulement qui est au contact même du sol de roulage est la partie du pneumatique qui est au premier chef soumise au phénomène d'usure. Pour améliorer la résistance à l'usure des bandes de roulement, on utilise typiquement des matériaux à base de caoutchouc renforcé par des charges relativement fines. Ces charges renforçantes relativement fines sont le plus souvent des objets de dimension faible, c'est à dire submicronique. A l'inverse l'utilisation d'objets plus grossiers de l'ordre du micron a généralement pour effet de réduire la résistance à l'usure de la bande de roulement.

La fabrication d'un pneumatique requiert une étape de cuisson du pneumatique qui permet de réticuler, notamment de vulcaniser, les composants caoutchouteux du pneumatique. Cette étape de cuisson est déterminante pour les performances du pneumatique. En effet le degré de réticulation va déterminer les propriétés des composants caoutchouteux. Pour rechercher des gains en productivité dans la fabrication des pneumatiques, il est d'intérêt de pouvoir réduire le temps de cette étape de cuisson sans affecter le degré de réticulation souhaité des composants caoutchouteux du pneumatique. Une solution à ce problème est de rendre certains composants caoutchouteux du pneumatique conducteurs thermiquement, par exemple en introduisant dans les compositions des composants caoutchouteux du pneumatique des objets conducteurs thermiquement. Parmi les objets conducteurs thermiquement on peut par exemple citer les nanotubes de carbone, les fibres de carbure de silicium, les fibres de carbone. Les fibres de carbone ont cependant l'inconvénient d'être des objets grossiers, notamment de l'ordre du micron. Par conséquent leur utilisation dans une composition de caoutchouc pour bande de roulement a le plus souvent pour conséquence de réduire très fortement la résistance à l'usure de la bande de roulement.

Les Demanderesses ont découvert que l'utilisation de fibres de carbone spécifiques orientées de façon spécifique dans une bande de roulement d'un pneumatique permet d'offrir un compromis amélioré entre la conductivité thermique et la résistance à l'usure de la bande de roulement, sans pénaliser sensiblement par ailleurs les autres performances comme par exemple l'adhérence du pneumatique.

Ainsi un premier objet de l'invention est un pneumatique comportant une bande de roulement qui comprend une composition de caoutchouc à base d'au moins :
- une matrice élastomère,
- une charge renforçante,
- de fibres de carbone ex brai,
- facultativement un plastifiant,
   z étant la direction normale à la surface de la bande de roulement destinée à être en contact avec un sol de roulage, x et y étant deux directions orthogonales à z, x la direction circonférentielle du pneumatique, y la direction axiale par rapport à l'axe de rotation du pneumatique,
   Cx, Cy et Cz étant les diffusivités thermiques mesurées à 25°C de la bande de roulement à l'état cuit dans respectivement les directions x, y et z,
   lequel pneumatique présente des rapports de diffusivité thermique Cz/Cx et Cz/Cy supérieurs à 2.

Un autre objet de l'invention est un procédé de fabrication du pneumatique conforme à l'invention.

L'invention a également pour objet une couche constituée de la même composition de caoutchouc que la bande de roulement du pneumatique conforme à l'invention, laquelle couche présente des rapports de diffusivité thermique C'z'/C'x' et C'z'/Cy' supérieurs à 2,
- C'x, C'y' et C'z' étant les diffusivités thermiques mesurées à 25°C de la couche à l'état cuit dans respectivement les directions x', y'et z',
- x', y'et z' étant des directions orthogonales entre elles, z' étant la direction préférentielle des fibres de carbone.

L'invention a aussi pour objet un procédé pour fabriquer la couche conforme à l'invention.

L'invention a aussi pour objet une bande de roulement ou une portion de bande de roulement d'un pneumatique, laquelle bande de roulement ou portion bande de roulement est constituée par la juxtaposition de couches conformes à l'invention assemblées selon leurs faces perpendiculaires à la direction x', x' étant la direction orthogonale au plan moyen de chaque couche (y'z') défini par les directions y' et z', la direction z' coïncidant avec la direction radiale du pneumatique.

### I- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties de la matrice élastomère de la composition de caoutchouc, la matrice élastomère consistant en la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

On définit z comme étant la direction normale à la surface de la bande de roulement destinée à être en contact avec un sol de roulage, x et y comme étant deux directions orthogonales à z, x la direction circonférentielle du pneumatique, y la direction axiale par rapport à l'axe de rotation du pneumatique. Cx, Cy et Cz sont les diffusivités thermiques de la bande de roulement à l'état cuit dans respectivement les directions x, y et z. Elles sont mesurées à 25°C selon la norme ASTM E 1461.

Les rapports des diffusivités thermiques mesurées à 25°C Cz/Cx et Cz/Cy sont supérieurs à 2, de préférence supérieurs à 3, de manière plus préférentielle supérieurs ou égaux à 4. Ces valeurs de rapports caractérisent une certaine anisotropie thermique de la bande de roulement causée par une orientation préférentielle des fibres de carbone ex brai dans la direction normale à la surface de la bande de roulement.

La matrice élastomère peut être constituée d'un ou plusieurs élastomères qui se différencient des uns des autres par leur macrostructure ou leur microstructure. La matrice élastomère comprend de préférence un élastomère diénique.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

Dans le cas de copolymères du type (b), ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, l'alpha-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Préférentiellement, l'élastomère diénique est un élastomère essentiellement insaturé choisi dans le groupe constitué par les polybutadiènes, les polyisoprènes, les copolymères de butadiène, les copolymères d'isoprène, et les mélanges de ces élastomères. A titre d'élastomère diénique convient tout particulièrement un polybutadiène (BR), un copolymère de butadiène et de styrène (SBR), un caoutchouc naturel (NR) ou un polyisoprène de synthèse (IR) présentant préférentiellement un taux molaire de liaison cis-1,4 supérieur à 90% ou leurs mélanges.

A titre de charge renforçante peut être utilisée tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

La charge renforçante peut comprendre un noir de carbone, une charge inorganique ou leur mélange, la charge inorganique étant de préférence une silice.

Selon un mode de réalisation particulier de l'invention, la charge inorganique, préférentiellement une silice, représente plus de 50% en masse de la charge renforçante de la composition de caoutchouc. On dit alors que la charge inorganique renforçante est majoritaire.

Lorsqu'il est combiné à une charge inorganique renforçante majoritaire telle que la silice, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

L'homme du métier sait ajuster le taux de charge renforçante totale dans la composition de caoutchouc en fonction de l'application visée de la composition de caoutchouc et en fonction de la quantité de plastifiant dans la composition de caoutchouc pour pouvoir réaliser la mise en oeuvre de la composition de caoutchouc (en anglais « processability »). Par conséquent pour une gamme de taux de plastifiant, l'homme du métier adapte le taux de charge renforçante.

Le taux de charge renforçante total est compris préférentiellement entre 30 et 180 pce, plus préférentiellement entre 40 pce et 160 pce. En deçà de 30 pce, le renforcement de la composition de caoutchouc peut être insuffisant pour apporter un niveau de cohésion ou de résistance à l'usure adéquats du composant caoutchouteux du pneumatique comprenant cette composition. Au-delà de 180 pce, il existe un risque d'augmentation de l'hystérèse et donc de la résistance au roulement des pneumatiques. De manière encore plus préférentielle, le taux de charge renforçante totale est d'au moins 50 pce et au plus 160 pce. Avantageusement, le taux de charge renforçante totale varie dans un domaine allant de 80 pce à 140 pce, notamment dans une composition destinée à une bande de roulement pour pneumatique tourisme. L'une quelconque de ces plages de taux de charge renforçante totale s'applique à l'un quelconque des modes de réalisation de l'invention.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z-A-Sₓ-A-Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 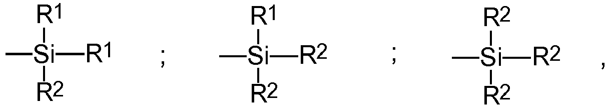 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 15 pce, plus préférentiellement compris dans un domaine allant de 3 à 13 pce. Ce taux est aisément ajusté par l'homme du métier selon le taux de charge inorganique utilisé dans la composition.

Selon un mode de réalisation de l'invention, la composition de caoutchouc comprend un plastifiant. Par un plastifiant, on entend un ou plusieurs plastifiants. Le plastifiant peut être un plastifiant liquide, une résine ou leur mélange.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 40 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes :
- solvant d'élution : le tétrahydrofurane,
- température 35°C ;
- concentration 1 g/litre ;
- débit :1 ml/min ;
- volume injecté : 100 µl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (lp = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 25°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (lp) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/vinylaromatique, les résines de copolymère (D)CPD/terpène, les résines de copolymère terpène phénol, les résines de copolymère (D)CPD/ coupe C5, les résines de copolymère (D)CPD/coupe C9, les résines de copolymère terpène/vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/styrène ou résines coupe C₅/coupe C₉, ou encore par la société Struktol sous dénomination "40 MS" ou "40 NS" (mélanges de résines aromatiques et/ou aliphatiques).

Tout agent plastifiant liquide, en particulier une huile, connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Le taux de plastifiant, à savoir de plastifiant liquide ou de résine ou de leur mélange, dans la composition de caoutchouc peut varier largement selon la quantité de charge renforçante et de fibres de carbone ex brai introduites dans la composition de caoutchouc, mais aussi par exemple en fonction de la viscosité de la matrice élastomère et selon les niveaux de rigidité à cru et à cuit souhaités de la composition de caoutchouc. La quantité de plastifiant est déterminée selon un taux de dilution choisi. On entend par taux de dilution le rapport de la masse du plastifiant sur la somme des masses du plastifiant et de la matrice élastomère.

Selon un mode de réalisation de l'invention, la quantité de plastifiant dans la composition de caoutchouc est ajustée de façon à atteindre un taux de dilution supérieur à 0.35. Le taux de dilution est compris préférentiellement entre 0.35 et 0.60, plus préférentiellement entre 0.35 et 0.55. En raison de l'anisotropie de la bande de roulement du pneumatique causée par une orientation préférentielle des fibres de carbone ex brai dans la direction normale à la surface de la bande de roulement, la bande de roulement du pneumatique conforme à l'invention présente des rigidités différentes selon les directions x, y, z. Le taux de dilution permet de régler ces rigidités afin d'atteindre un compromis entre ces rigidités. L'optimisation de ce compromis permet d'optimiser à son tour le fonctionnement du pneumatique.

Les fibres de carbone ex-brai sont issues de brais (en anglais « pitch »), par exemple de brais de charbon ou de pétrole et peuvent être préparés selon le procédé suivant : les brais sont dans une première étape transformés en précurseurs fibrillaires par une première étape de filage en fondu (« melt spinning »), ces précurseurs fibrillaires sont ensuite généralement stabilisés thermiquement par un premier traitement thermique sous atmosphère oxydante (100°C-400°C) avant de subir des traitements à plus hautes températures sous atmosphère inerte de carbonisation (1000-1600°C) puis de graphitisation (2500°C-3000°C). Le procédé de fabrication des fibres de carbone ex brai est largement décrit, par exemple dans la revue « Nippon Steel Technical Report, N°59, october 1993, page 65 » ou dans l'ouvrage de référence « Carbon Fibers » ; 1998 ; 3rd edition ; Donnet, J.-B., Wang, T. K., Rebouillat, S., Peng, J. C. M.

Les fibres de carbone ex brai sont des objets caractérisés généralement par un diamètre des fibres qui est d'au moins un micron. Leur diamètre peut varier de 1 µm à 50 µm, préférentiellement de 3 µm à 20 µm, plus préférentiellement de 5 µm à 15 µm. Ces plages préférentielles de diamètre des fibres de carbone ex brai s'appliquent à l'un quelconque des modes de réalisation de l'invention.

Les fibres de carbone ex brai peuvent avoir une longueur qui varie largement. Le choix de la longueur des longueurs des fibres de carbone ex brai est généralement limité aux produits proposés par les fournisseurs. L'homme du métier comprend aussi que la longueur des fibres de carbone ex brai est limitée par les dimensions du matériel de mélangeage utilisé pour mélanger les divers ingrédients de la composition de caoutchouc, car il doit pouvoir les introduire dans les outils de mélangeage. Par exemple, quel que soit le mode de réalisation de l'invention, conviennent les fibres de carbone ex brai ayant une longueur moyenne en nombre allant de la centaine de microns à quelques millimètres, par exemple de 50 µm à 30 mm ou de 50 µm à 3 mm. On utilise des fibres de carbone de longueur variant préférentiellement de 50 µm à 500 µm, plus préférentiellement de 50 µm à 250 µm. Ces plages préférentielles de longueur des fibres de carbone ex brai s'appliquent à l'un quelconque des modes de réalisation de l'invention. On utilise typiquement des fibres coupées (en anglais, « chopped fibers ») ou des fibres hachées (en anglais « milled fibers »).

La longueur moyenne des fibres de carbone ex brai est déterminée selon la méthode décrite dans le paragraphe 11.1.3, plus précisément à partir de la deuxième opération décrite dans le sous paragraphe ii).

Au cours du mélangeage des fibres de carbone ex brai avec les autres ingrédients de la composition de caoutchouc, l'action mécanique peut couper les fibres de carbone ex brai en une longueur plus faible que leur longueur d'origine, c'est-à-dire la longueur qu'elles avaient avant le mélangeage. La longueur moyenne en nombre des fibres de carbone ex brai dans la composition de caoutchouc peut aller de 50 µm à 250 µm.

Selon un mode de réalisation de l'invention applicable aux modes de réalisations décrits, la fraction volumique des fibres de carbone ex brai dans la composition de caoutchouc varie dans un domaine allant de 1 à 15%. De manière préférentielle cette fraction volumique varie dans un domaine allant de 3 à 12%. La fraction volumique des fibres de carbone ex brai est définie comme étant le rapport du volume des fibres de carbone ex brai sur le volume de l'ensemble des constituants de la composition de caoutchouc, étant entendu que le volume de l'ensemble des constituants est calculé en additionnant le volume de chacun des constituants de la composition de caoutchouc. En deçà de 1%, on constate que la composition de caoutchouc est insuffisamment conductrice pour permettre de réduire sensiblement le temps de cuisson du pneumatique. Au-delà de 15%, la performance d'usure du pneumatique peut être pénalisée ainsi que la performance d'adhérence du pneumatique en raison d'une rigidité trop élevée de la composition de caoutchouc qui compose la bande de roulement. La plage préférentielle de 3 à 12% permet d'optimiser davantage le compromis conductivité thermique usure de la bande de roulement.

La quantité de fibres de carbone ex brai dans la composition de caoutchouc est déterminée par sa fraction volumique et dépend donc de la quantité des autres composants de la composition de caoutchouc, notamment de la quantité de plastifiant dans la composition de caoutchouc. La quantité de plastifiant permettant de régler la rigidité de la composition de caoutchouc et son aptitude à être mise en oeuvre (en anglais « processability »), la quantité de fibres de carbone ex brai est ajustée selon la fraction volumique visée de fibres de carbone ex brai dans la composition de caoutchouc et selon la rigidité et la viscosité visées de la composition de caoutchouc. Pour un taux de dilution allant de 0.35 à 0.60, la quantité de fibres de carbone peut varier de 4 à 160 pce selon la fraction volumique visée de fibres de carbone ex brai dans la composition de caoutchouc, notamment pour des fractions volumiques allant de 1 à 15%. Par exemple, pour un taux de dilution de 0.35, la quantité de fibres de carbone ex brai dans la composition de caoutchouc peut varier de 4 à 100 pce. Par exemple pour un taux de dilution de 0.60, la quantité de fibres de carbone ex brai dans la composition de caoutchouc peut varier de 7 à 160 pce.

La composition de caoutchouc conforme à l'invention peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, des pigments, des agents de protection tels que cires anti-ozone, anti-ozonants chimiques, anti-oxydants, des agents anti-fatigue, , un système de réticulation, des accélérateurs ou retardateurs de vulcanisation, des activateurs de vulcanisation. Quel que soit le mode de réalisation de l'invention décrit, le système de réticulation est de préférence à base de soufre, mais il peut être également à base de donneurs de soufre, de peroxyde, de bismaléimides ou de leurs mélanges.

Le mélangeage des constituants de la composition de caoutchouc peut être réalisé comme traditionnellement dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La bande de roulement du pneumatique conforme à l'invention peut être préparée selon un procédé qui comprend les étapes suivantes :
- mélanger la matrice élastomère, la charge renforçante, les fibres de carbone ex brai, le cas échéant le plastifiant pour former un mélange,
- calandrer le mélange pour former une couche ayant un plan moyen (y'z') défini par deux directions y' et z' orthogonales entre elles, z' étant la direction du calandrage, de façon à orienter les fibres de carbone ex brai dans la direction du calandrage,
- puis découper la couche en portions identiques selon un plan de coupe perpendiculaire à la direction z',
- assembler les portions en les juxtaposant deux à deux selon leurs faces respectives perpendiculaires à la direction x' orthogonale au plan moyen (y'z').

On entend par couche une étendue plus ou moins uniforme de la composition, dont l'épaisseur est faible relativement à l'étendue superficielle. De façon générale, une couche présente un plan moyen (y'z') défini par deux directions y' et z' orthogonales. On définit x' comme étant la direction orthogonale au plan moyen (y'z').

Au cours de l'assemblage d'un pneumatique comprenant usuellement, radialement de l'extérieur vers l'intérieur, une bande de roulement, une armature de sommet et une armature de carcasse, la bande de roulement peut être posée radialement à l'extérieur de l'armature de sommet du pneumatique de manière à ce que les fibres de carbone ex brai soient orientées préférentiellement radialement par rapport à l'axe de rotation du pneumatique.

En fonction des conditions de réalisation particulières de l'invention, on ajuste l'épaisseur de la couche au cours de l'étape de calandrage de façon à obtenir l'orientation des fibres de carbone ex brai dans le sens du calandrage. L'orientation des fibres de carbone ex brai dans la couche peut être réalisée typiquement après homogénéisation du système de vulcanisation en faisant passer plusieurs fois le mélange dans une calandre toujours dans le même sens.

Alternativement la bande de roulement du pneumatique conforme à l'invention peut être préparée selon le procédé précédemment décrit en remplaçant l'étape de découpage et d'assemblage par un pliage en zigzag de la couche, comme cela est décrit par exemple dans le brevet US 6,666,247.

Selon un mode de réalisation préférentiel de l'invention, la bande de roulement du pneumatique conforme à l'invention est constituée uniquement de la composition de caoutchouc décrite selon l'un quelconque des modes de réalisation de l'invention.

La couche, autre objet de l'invention, a pour caractéristique essentielle d'être constituée de la même composition de caoutchouc que la bande de roulement du pneumatique conforme à l'invention. La couche conforme à l'invention a aussi pour caractéristique essentielle de présenter des rapports de diffusivité thermique C'z'/C'x' et C'z'/C'y' supérieurs à 2,
- C'x, C'y' et C'z' étant les diffusivités thermiques mesurées à 25°C de la couche à l'état cuit dans respectivement les directions x', y'et z',
- x', y' et z' étant des directions orthogonales entre elles, z' étant la direction préférentielle des fibres de carbone.

Quel que soit le mode de réalisation de la couche conforme à l'invention, les rapports de diffusivité thermique C'z'/C'x' et C'z'/C'y', mesurées aussi à 25°C, sont préférentiellement supérieurs à 3, plus préférentiellement supérieurs ou égaux à 4. Ces rapports préférentiels s'appliquent à la couche constituée d'une composition définie selon l'un quelconque des modes de réalisation de l'invention.

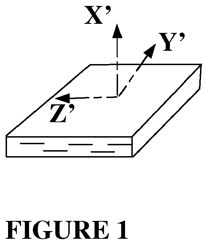

Selon un mode de réalisation particulier de l'invention, y' et z' définissent le plan moyen de la couche, x' est la direction orthogonale au plan moyen (y'z'). Ce mode de réalisation est illustré par la figure 1.

Selon ce mode de réalisation particulier, la couche conforme à l'invention est utilisée comme élément d'une bande de roulement d'un pneumatique. Dans ce cas, la bande de roulement ou une portion de bande de roulement est constituée par la juxtaposition de couches conformes à l'invention assemblées selon leurs faces perpendiculaires à la direction x', x' étant la direction orthogonale au plan moyen de chaque couche (y'z') défini par les directions y' et z', la direction z' coïncidant avec la direction radiale du pneumatique'. Selon ce mode de réalisation particulier de l'invention, x' coïncide de préférence avec la direction circonférentielle du pneumatique.

La couche peut être préparée par un procédé qui comprend les étapes suivantes :
- mélanger la matrice élastomère, la charge renforçante, les fibres de carbone ex brai, le cas échéant le plastifiant pour former un mélange,
- calandrer le mélange pour former une couche de façon à orienter les fibres de carbone ex brai dans la direction du calandrage, z' coïncidant avec la direction du calandrage.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### II.1.1 Test usure :

La résistance à l'usure de chaque pneumatique a été déterminée au moyen d'un indice relatif d'usure qui est fonction de la hauteur de gomme restante, après roulage sur un circuit sévère pour l'usure qui est très virageux et dont le revêtement est caractérisé par des micro-rugosités, à une vitesse moyenne de 77 km/h et jusqu'à ce que l'usure atteigne les témoins d'usure disposés dans les rainures des bandes de roulement. Pour chacun des exemples on a obtenu cet indice relatif d'usure en comparant la hauteur de gomme restante de la bande de roulement étudiée à la hauteur de gomme restante de la bande de roulement témoin, laquelle présente par définition un indice d'usure de 100.

### II.1.2 Diffusivité thermique :

La diffusivité thermique est déterminée selon la norme ASTM E 1461 à 25°C.
La diffusivité thermique de la couche CA ou CB est exprimée en base 100 par rapport à la couche CT prise comme témoin. Plus la valeur est supérieure à 100, plus la plaque est conductrice dans la direction considérée.

L'anisotropie thermique de la couche est exprimée par le rapport C'z'/C'x' et C'z'/C'y', sachant que la direction z' est la direction normale à une surface de la couche et correspond au sens du calandrage.

### II.1.3 Analyse de microscopie :

La longueur moyenne en nombre des fibres de carbone dans la composition de caoutchouc est déterminée selon la méthode décrite ci-dessous.

Les dimensions sont mesurées selon le mode opératoire décrit ci-après en plusieurs étapes. On appelle mélange l'objet constitué par la composition de caoutchouc après mélangeage des constituants de la composition de caoutchouc et après vulcanisation.
II.1.3.i) La première étape consiste à extraire les fibres de carbone du mélange en opérant de la manière suivante :
   - le mélange est découpé en petits morceaux puis une extraction à l'acétone est réalisée de façon à éliminer au maximum les additifs tels que huiles, résines, cires, anti-oxydants...
   - le mélange est ensuite pyrolysé sous atmosphère inerte (N2) à 550°C, de façon à éliminer les matières organiques par cracking : polymères, réseau soufre, accélérateurs, plastifiants résiduels...
   - le résidu obtenu contient alors les fibres de carbone, le noir de carbone et des produits minéraux initialement présents dans le mélange (comme la silice) ou éventuellement formés pendant la pyrolyse.
II.1.3.ii) La seconde étape consiste à préparer l'échantillon à placer dans le microscope à balayage électronique (MEB) en opérant de la manière suivante :
   - A l'issu de la première étape on récupère les résidus de combustion contenant les fibres de carbone. Ceux-ci sont très légèrement comprimés à l'aide d'un mortier et d'un pilon pour séparer les fibres les unes des autres.
   - Les fibres de carbone sont ainsi récupérées sur un porte échantillon comportant un adhésif carbone. Il est également possible de venir tamponner directement le porte-échantillon en aluminium supporté de l'adhésif carbone sur les fibres extraites.
   - Les échantillons sont ensuite soufflés avec de l'air sec pour éliminer les fibres libres qui pourraient endommager la colonne du microscope.
II.1.3.iii) La troisième étape consiste à déterminer les dimensions des fibres de carbone :
   - Les échantillons sont observés par Microscopie Electronique à Balayage (MEB-FEG) sur un microscope FEI Quanta 400 en vide dégradé. Les observations sont réalisées en contraste de topographie. On travaille principalement avec des largeurs de champs de 1mm voire 2mm, 500µm et 250µm afin de balayer toute la gamme de taille.
   - Une fois les observations réalisées, des mesures de longueur sont réalisées par l'intermédiaire d'un logiciel de traitement d'image AnalySIS. Une observation matricielle des échantillons est réalisée : des champs adjacents ont été réalisés afin de couvrir environ 5mm² sur le porte-échantillon, avec des champs d'observations de 500µm. L'image matricielle a été reconstruite à l'aide du logiciel de traitement d'image AnalySIS. L'ensemble des résultats est compilé pour obtenir les données caractéristiques de la fibre extraite de mélange (longueur moyenne, longueur minimale, longueur maximale, écart-type, distribution en nombre). Pour chaque échantillon, au moins 50 objets sont mesurés.

### II.2-Préparation des compositions de caoutchouc :

Les formulations (en pce) des compositions T, A et B sont décrites dans le tableau I.
Les compositions A et B contiennent toutes les deux des fibres de carbone selon une fraction volumique de 10%. Elles diffèrent en ce que la composition A contient des fibres de carbone ex PAN (polyacrylonitrile), la composition B contient des fibres de carbone ex brai.
La composition T diffère des compositions A et B en ce qu'elle ne contient pas de fibres de carbone.
Le taux de dilution des compositions A, B et T est identique (0.4).

Les compositions sont préparées par thermomalaxage des constituants de la composition selon le mode opératoire suivant :
On procède pour la fabrication de ces compositions de la manière suivante : on introduit dans un mélangeur interne (taux de remplissage final : environ 70% en volume), dont la température initiale de cuve est d'environ 80°C, l'élastomère, la charge renforçante, l'agent de couplage, les plastifiants, les fibres de carbone ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » d'environ 160°C. On récupère le mélange ainsi obtenu, on le refroidit puis on incorpore le soufre et l'accélérateur sulfénamide sur un mélangeur (homo-finisseur) à 23°C, en mélangeant le tout (phase productive) pendant un temps approprié (par exemple entre 5 et 12 min). Cette opération d'homogénéisation du système de vulcanisation (soufre et sulfénamide) consiste à faire passer le mélange douze fois entre les cylindres en changeant à chaque fois le sens d'introduction (on récupère le mélange sous les cylindres, on le plie et on réintroduit entre les cylindres en changeant le sens du passage)

Dans le cas des compositions A et B, après homogénéisation du système de vulcanisation, on effectue douze passages supplémentaires sans changer le sens d'introduction du mélange, dans le but d'orienter les fibres de carbone (au sein de la feuille de mélange) dans le sens du calandrage.

Ensuite les couches CT, CA et CB constituées respectivement des compositions T, A et B sont découpées sous forme d'éprouvette, puis vulcanisées. Dans le cas de la confection des éprouvettes à partir des couches CA et CB, la mise en dimension d'une couche à la taille d'une éprouvette de 2.5 mm d'épaisseur est réalisée par réduction progressive de l'épaisseur de la couche en passant le mélange dans une calandre en conservant le sens imposé lors de l'orientation des fibres de carbone sur l'homo-finisseur.

Les couches vulcanisées sont caractérisées pour déterminer :
- leurs diffusivités thermiques respectivement selon la direction normale à la surface de la couche z', selon x' et y' directions orthogonales entre elles et à z'
- ainsi que leur anisotropie thermique

Les compositions A, B et T sont utilisées respectivement comme couche CA, CB et CT pour former des bandes de roulement d'un pneumatique. Les couches sont posées radialement à l'extérieur de l'armature de sommet du pneumatique de façon à ce que les fibres de carbone soient orientées préférentiellement dans la direction radiale par rapport à l'axe de rotation du pneumatique. Les bandes de roulement sont produites selon le procédé décrit précédemment qui met en oeuvre des étapes de découpage et d'assemblage.

### II.3- Résultats

Les résultats figurent dans le tableau II et le tableau III.

La longueur moyenne en nombre des fibres de carbone dans la composition de caoutchouc est de 172 µm et de 100 µm respectivement pour les couches CA et CB.

Diffusivité thermique et anisotropie :
Les rapports C'z'/C'x' et C'z'/C'y' des couches CA et CB démontrent leur anisotropie thermique ainsi que l'orientation préférentielle des fibres de carbone dans le sens du calandrage. La valeur C'z'/C'x' et C'z'/C'y' étant égale à 1 pour la couche CT, on vérifie bien que la couche CT est isotrope.

La couche CB constitue le matériau qui présente à la fois la meilleure diffusivité thermique et la plus forte anisotropie thermique comparativement à la couche CA.

Usure :
En utilisant la couche CA, il a été observé très rapidement des arrachements de matière très importants sous forme de bloc, le test d'usure devenant non quantifiable. Cette détérioration très rapide et très importante met en évidence que la couche CA utilisée comme bande de roulement d'un pneumatique n'est quasiment pas résistante à l'usure. En revanche la bande de roulement comprenant la couche CB conformément à l'invention présente une certaine résistance à l'usure (indice à 80), certes un peu en retrait par rapport à la bande de roulement comprenant la couche CT.

On constate que le pneumatique conforme à l'invention offre un meilleur compromis conductivité thermique usure que le pneumatique non conforme à l'invention comportant des fibres de carbone ex PAN. Par ailleurs le pneumatique conforme à l'invention présente un compromis conductivité thermique usure amélioré comparativement au pneumatique témoin ne comportant pas de fibres de carbone. L'amélioration de ce compromis permet aussi d'améliorer le compromis entre la productivité de l'étape de cuisson dans la confection du pneumatique et la performance d'usure du pneumatique.

**Tableau I**

| Composition | T | A | B |
|---|---|---|---|
| SBR (1) | 100 | 100 | 100 |
| Noir de carbone (2) | 4 | 4 | 4 |
| Silice (3) | 109 | 109 | 109 |
| Fibres de carbone ex-PAN (4) | | 49 | |
| Fibres de carbone ex-brai (5) | | | 61 |
| Agent de couplage (6) | 8 | 8 | 8 |
| DPG (7) | 1.7 | 1.7 | 1.7 |
| Huile (8) | 14 | 14 | 14 |
| Résine (9) | 54 | 54 | 54 |
| 6PPD (10) | 2.3 | 2.3 | 2.3 |
| Acide stéarique (11) | 2 | 2 | 2 |
| ZnO (12) | 2.5 | 2.5 | 2.5 |
| CBS (13) | 1.8 | 1.8 | 1.8 |
| Soufre | 1.4 | 1.4 | 1.4 |
| Fraction volumique des fibres de carbone (%) | 0 | 10% | 10% |

| | | | |
|---|---|---|---|
| (1) SBR solution à 26% de styrène et 24% de motif 1,2-butadiène de la partie butadiénique possédant une fonction -SiOH en bout de chaine ; (2) Noir de carbone de type N234 ; (3) Silice « Zeosil 1165 MP » (4) Fibres de carbone ex-PAN, « SIGRAFIL C 30 APS » de la société SGL Group ; (5) Fibres de carbone ex-brai, « XN-100 » de la société Nippon Graphite Fiber Corporation ; (6) Bis(triethoxysilylpropyl)tetrasulfide, « Si69 » de la société Evonik ; (7) Diphénylguanidine, « Perkacit DPG » de la société Flexsys ; (8) Huile de tournesol oléique (Lubrirob TOD 1880 de la société Novance) ; (9) Résine C5/C9 « Wingtack STS » de la société Cray Valley ; (10) N-1,3-diméthylbutyl-N-phénylparaphénylènediamine, « Santoflex 6PPD » de la société Eastman ; (11) Acide stéarique ; (12) Oxyde de zinc (grade industriel - société Umicore) ; (13) N-cyclohexyl-2-benzothiazyl-sulfénamide (« Santocure CBS » de la société Flexsys) ; | | | |

**Tableau II**

| Couche | CT | CA | CB |
|---|---|---|---|
| C'z'/C'x' | 1 | 2.7 | 5.2 |
| C'z'/C'y' | 1 | 2.7 | 5.2 |
| C'z' | 100 | 342 | 770 |

**Tableau III**

| Couche | CT | CA | CB |
|---|---|---|---|
| Usure | 100 | non quantifiable | 80 |

## Revendications

1. Pneumatique comportant une bande de roulement qui comprend une composition de caoutchouc à base d'au moins :
- une matrice élastomère,
- une charge renforçante,
- de fibres de carbone ex brai,
- facultativement un plastifiant,
z étant la direction normale à la surface de la bande de roulement destinée à être en contact avec un sol de roulage, x et y étant deux directions orthogonales à z, x la direction circonférentielle du pneumatique, y la direction axiale par rapport à l'axe de rotation du pneumatique,
Cx, Cy et Cz étant les diffusivités thermiques mesurées à 25°C de la bande de roulement à l'état cuit dans respectivement les directions x, y et z,
lequel pneumatique présente des rapports de diffusivité thermique Cz/Cx et Cz/Cy supérieurs à 2.

2. Pneumatique selon la revendication 1 dans lequel la matrice élastomère comprend un élastomère diénique.

3. Pneumatique selon l'une quelconque des revendications 1 à 2 dans lequel la composition de caoutchouc comprend un plastifiant.

4. Pneumatique selon la revendication 3 dans lequel le rapport de la masse du plastifiant sur la somme des masses du plastifiant et de la matrice élastomère est supérieur à 0.35.

5. Pneumatique selon la revendication 4 dans lequel le rapport de la masse du plastifiant sur la somme des masses du plastifiant et de la matrice élastomère est compris entre 0.35 et 0.60, préférentiellement entre 0.35 et 0.55.

6. Pneumatique selon l'une quelconque des revendications 1 à 5 dans lequel la fraction volumique des fibres de carbone ex brai dans la composition de caoutchouc varie dans un domaine allant de 1 à 15%, de préférence de 3 à 12%.

7. Pneumatique selon l'une quelconque des revendications 1 à 6 dans lequel la charge renforçante comprend un noir de carbone ou une charge inorganique.

8. Pneumatique selon la revendication 7 dans lequel la charge inorganique est une silice.

9. Pneumatique selon l'une quelconque des revendications 7 à 8 dans lequel la charge inorganique représente plus de 50% en masse de la charge renforçante.

10. Pneumatique selon la revendication 9 dans lequel le taux de noir de carbone est inférieur à 20 pce, préférentiellement inférieur à 10 pce, plus préférentiellement compris entre 2 et 10 pce.

11. Pneumatique selon l'une quelconque des revendications 2 à 10 dans lequel l'élastomère diénique est essentiellement insaturé choisi dans le groupe constitué par les polybutadiènes, les polyisoprènes, les copolymères de butadiène, les copolymères d'isoprène et leurs mélanges.

12. Pneumatique selon l'une quelconque des revendications 1 à 11 dans lequel les rapports de diffusivité thermique Cz/Cx et Cz/Cy sont supérieurs à 3, de préférence supérieurs ou égaux à 4.

13. Procédé pour préparer un pneumatique selon l'une quelconque des revendications 1 à 12 qui comprend les étapes suivantes :
- mélanger la matrice élastomère, la charge renforçante, les fibres de carbone ex brai, le cas échéant le plastifiant pour former un mélange,
- calandrer le mélange pour former une couche ayant un plan moyen (y'z') défini par deux directions y' et z' orthogonales entre elles, z' étant la direction du calandrage, de façon à orienter les fibres de carbone ex brai dans la direction du calandrage,
- puis découper la couche en portions identiques selon un plan de coupe perpendiculaire à la direction z',
- assembler les portions en les juxtaposant deux à deux selon leurs faces respectives perpendiculaires à la direction x' orthogonale au plan moyen (y'z').

14. Procédé pour préparer un pneumatique selon l'une quelconque des revendications 1 à 12 qui comprend les étapes suivantes :
- mélanger la matrice élastomère, la charge renforçante, les fibres de carbone ex brai, le cas échéant le plastifiant pour former un mélange,
- calandrer le mélange pour former une couche ayant un plan moyen (y'z') défini par deux directions y' et z' orthogonales entre elles, z' étant la direction du calandrage, de façon à orienter les fibres de carbone ex brai dans la direction du calandrage,
- plier en zigzag la couche.

15. Couche constituée d'une composition de caoutchouc comme définie selon l'une quelconque des revendications 1 à 12, laquelle couche présente des rapports de diffusivité thermique C'z'/C'x' et C'z'/Cy' supérieurs à 2,
- C'x, C'y' et C'z' étant les diffusivités thermiques mesurées à 25°C de la couche à l'état cuit dans respectivement les directions x', y'et z',
- x', y' et z' étant des directions orthogonales entre elles, z' étant la direction préférentielle des fibres de carbone.

16. Couche selon la revendication 15 dans laquelle y' et z' définissent le plan moyen de la couche, x' est la direction orthogonale au plan moyen (y'z').

17. Bande de roulement ou portion de bande de roulement d'un pneumatique constituée par la juxtaposition de couches, lesquelles couches sont définies selon la revendication 16, et sont assemblées selon leurs faces perpendiculaires à la direction x', la direction z' coïncidant avec la direction radiale du pneumatique.

18. Bande de roulement ou portion de bande de roulement d'un pneumatique selon la revendication 17 dans laquelle x' coïncide avec la direction circonférentielle du pneumatique.

19. Procédé pour préparer une couche selon la revendication 16 qui comprend les étapes suivantes :
- mélanger la matrice élastomère, la charge renforçante, les fibres de carbone ex brai, le cas échéant le plastifiant pour former un mélange,
- calandrer le mélange pour former une couche de façon à orienter les fibres de carbone ex brai dans la direction du calandrage, z' coïncidant avec la direction du calandrage.

## Patentansprüche

1. Reifen, umfassend eine Lauffläche, die eine Kautschukzusammensetzung auf Basis von mindestens:
- einer Elastomermatrix,
- einem verstärkenden Füllstoff,
- Ex-Pitch-Kohlefasern,
- gegebenenfalls einem Weichmacher umfasst, wobei z die zu der für den Kontakt mit einem Rolluntergrund vorgesehene Oberfläche der Lauffläche senkrechte Richtung ist, x und y zwei zu z orthogonale Richtungen sind, x die Umfangsrichtung des Reifens ist und y die Axialrichtung bezüglich der Drehachse des Reifens ist,
wobei Cx, Cy und Cz die bei 25 °C gemessenen Temperaturleitfähigkeiten der Lauffläche im gehärteten Zustand in den Richtungen x, y bzw. z sind,
wobei der Reifen Temperaturleitfähigkeitsverhältnisse Cz/Cx und Cz/Cy größer als 2 aufweist.

2. Reifen nach Anspruch 1, wobei die Elastomermatrix ein Dienelastomer umfasst.

3. Reifen nach einem der Ansprüche 1 bis 2, wobei die Kautschukzusammensetzung einen Weichmacher umfasst.

4. Reifen nach Anspruch 3, wobei das Verhältnis des Gewichts des Weichmachers zur Summe der Gewichte des Weichmachers und der Elastomermatrix über 0,35 liegt.

5. Reifen nach Anspruch 4, wobei das Verhältnis des Gewichts des Weichmachers zur Summe der Gewichte des Weichmachers und der Elastomermatrix zwischen 0,35 und 0,60, vorzugsweise zwischen 0,35 und 0,55, liegt.

6. Reifen nach einem der Ansprüche 1 bis 5, wobei der Volumenanteil der Ex-Pitch-Kohlefasern in der Kautschukzusammensetzung in einem Bereich von 1 bis 15 %, vorzugsweise 3 bis 12 %, variiert.

7. Reifen nach einem der Ansprüche 1 bis 6, wobei der Füllstoff einen Ruß oder einen anorganischen Füllstoff umfasst.

8. Reifen nach Anspruch 7, wobei es sich bei dem anorganischen Füllstoff um eine Kieselsäure handelt.

9. Reifen nach einem der Ansprüche 7 bis 8, wobei der anorganische Füllstoff mehr als 50 Gew.-% des verstärkenden Füllstoff ausmacht.

10. Reifen nach Anspruch 9, wobei der Rußgehalt weniger als 20 phe und vorzugsweise weniger als 10 phe beträgt und weiter bevorzugt zwischen 2 und 10 phe liegt.

11. Reifen nach einem der Ansprüche 2 bis 10, wobei das Dienelastomer im Wesentlichen ungesättigt ist und aus der Gruppe bestehend aus Polybutadienen, Polyisoprenen, Butadien-Copolymeren, Isopren-Copolymeren und Mischungen davon ausgewählt ist.

12. Reifen nach einem der Ansprüche 1 bis 11, wobei die Temperaturleitfähigkeitsverhältnisse Cz/Cx und Cz/Cy größer als 3 und vorzugsweise größer gleich 4 sind.

13. Verfahren zur Herstellung eines Reifens nach einem der Ansprüche 1 bis 12, das die folgenden Schritte umfasst:
- Mischen der Elastomermatrix, des verstärkenden Füllstoffs, der Ex-Pitch-Kohlefasern und gegebenenfalls des Weichmachers zur Bildung einer Mischung,
- Kalandrieren der Mischung zur Bildung einer Schicht mit einer durch die beiden zueinander orthogonalen Richtungen y' und z' definierten Mittenebene (y'z'), wobei z' die Kalandrierrichtung ist, zur Orientierung der Ex-Pitch-Kohlefasern in der Kalandrierrichtung,
- dann Schneiden der Schicht in gleiche Portionen entlang einer zu der Richtung z' senkrechten Schnittebene,
- Zusammenfügen der Teile durch paarweises Nebeneinanderlegen entlang ihrer jeweiligen, zu der zu der Mittenebene (y'z') orthogonalen Richtung x' senkrechten Flächen.

14. Verfahren zur Herstellung eines Reifens nach einem der Ansprüche 1 bis 12, das die folgenden Schritte umfasst:
- Mischen der Elastomermatrix, des verstärkenden Füllstoffs, der Ex-Pitch-Kohlefasern und gegebenenfalls des Weichmachers zur Bildung einer Mischung,
- Kalandrieren der Mischung zur Bildung einer Schicht mit einer durch die beiden zueinander orthogonalen Richtungen y' und z' definierten Mittenebene (y'z'), wobei z' die Kalandrierrichtung ist, zur Orientierung der Ex-Pitch-Kohlefasern in der Kalandrierrichtung,
- zickzackförmiges Falten der Schicht.

15. Schicht, bestehend aus einer Kautschukzusammensetzung gemäß einem der Ansprüche 1 bis 12, wobei die Schicht Temperaturleitfähigkeitsverhältnisse C'z'/C'x' und C'z'/C'y' größer als 2 aufweist,
- wobei C'x, C'y' und C'z' die bei 25 °C gemessenen Temperaturleitfähigkeiten der Schicht im gehärteten Zustand in den Richtungen x', y' bzw. z' sind,
- wobei x', y' und z' zueinander orthogonale Richtungen sind, wobei z' die Vorzugsrichtung der Kohlefasern ist.

16. Schicht nach Anspruch 15, wobei y' und z' die Mittenebene der Schicht definieren und x' die zur Mittenebene (y'z') orthogonale Richtung ist.

17. Lauffläche oder Laufflächenteil eines Reifens, gebildet durch Nebeneinanderlegen von Schichten, wobei die Schichten gemäß Anspruch 16 definiert sind und entlang ihren zu der Richtung x' senkrechten Flächen zusammengefügt sind, wobei die Richtung z' mit der Radialrichtung des Reifens zusammenfällt.

18. Lauffläche oder Laufflächenteil eines Reifens nach Anspruch 17, wobei x' mit der Umfangsrichtung des Reifens zusammenfällt.

19. Verfahren zur Herstellung einer Schicht nach Anspruch 16, das die folgenden Schritte umfasst:
- Mischen der Elastomermatrix, des verstärkenden Füllstoffs, der Ex-Pitch-Kohlefasern und gegebenenfalls des Weichmachers zur Bildung einer Mischung,
- Kalandrieren der Mischung zur Bildung einer Schicht zur Orientierung der Ex-Pitch-Kohlefasern in der Kalandrierrichtung, wobei z' mit der Kalandrierrichtung zusammenfällt.

## Claims

1. Tyre comprising a tread that comprises a rubber composition based on at least:
- an elastomer matrix,
- a reinforcing filler,
- ex-pitch carbon fibres,
- optionally a plasticizer,
z being the direction normal to the surface of the tread intended to be in contact with a running surface, x and y being two directions orthogonal to z, x the circumferential direction of the tyre, y the axial direction with respect to the axis of rotation of the tyre,
Cx, Cy and Cz being the thermal diffusivities measured at 25°C of the tread in the cured state respectively in the directions x, y and z,
which tyre has Cz/Cx and Cz/Cy thermal diffusivity ratios of greater than 2.

2. Tyre according to Claim 1, in which the elastomer matrix comprises a diene elastomer.

3. Tyre according to either one of Claims 1 and 2, in which the rubber composition comprises a plasticizer.

4. Tyre according to Claim 3, in which the ratio of the weight of plasticizer to the sum of the weights of the plasticizer and of the elastomer matrix is greater than 0.35.

5. Tyre according to Claim 4, in which the ratio of the weight of plasticizer to the sum of the weights of the plasticizer and of the elastomer matrix is between 0.35 and 0.60, preferably between 0.35 and 0.55.

6. Tyre according to any one of Claims 1 to 5, in which the volume fraction of the ex-pitch carbon fibres in the rubber composition varies within a range extending from 1 to 15%, preferably from 3 to 12%.

7. Tyre according to any one of Claims 1 to 6, in which the reinforcing filler comprises a carbon black or an inorganic filler.

8. Tyre according to Claim 7, in which the inorganic filler is a silica.

9. Tyre according to either one of Claims 7 and 8, in which the inorganic filler represents more than 50% by weight of the reinforcing filler.

10. Tyre according Claim 9, in which the content of carbon black is less than 20 phr, preferably less than 10 phr, more preferably between 2 and 10 phr.

11. Tyre according to any one of Claims 2 to 10, in which the diene elastomer is essentially unsaturated, selected from the group consisting of polybutadienes, polyisoprenes, butadiene copolymers, isoprene copolymers and mixtures thereof.

12. Tyre according to any one of Claims 1 to 11, in which the Cz/Cx and Cz/Cy thermal diffusivity ratios are greater than 3, preferably greater than or equal to 4.

13. Process for preparing a tyre according to any one of Claims 1 to 12, which comprises the following steps:
- mixing the elastomer matrix, the reinforcing filler, the ex-pitch carbon fibres, and where appropriate the plasticizer, in order to form a compound,
- calendering the compound in order to form a layer having a midplane (y'z') defined by two directions y' and z' orthogonal to one another, z' being the calendering direction, so as to orientate the ex-pitch carbon fibres in the calendering direction,
- then cutting the layer into identical portions along a cutting plane perpendicular to the direction z',
- assembling the portions by juxtaposing them in pairs along their respective faces perpendicular to the direction x' orthogonal to the midplane (y'z').

14. Process for preparing a tyre according to any one of Claims 1 to 12, which comprises the following steps:
- mixing the elastomer matrix, the reinforcing filler, the ex-pitch carbon fibres, and where appropriate the plasticizer, in order to form a compound,
- calendering the compound in order to form a layer having a midplane (y'z') defined by two directions y' and z' orthogonal to one another, z' being the calendering direction, so as to orientate the ex-pitch carbon fibres in the calendering direction,
- zigzag folding of the layer.

15. Layer consisting of a rubber composition as defined according to any one of Claims 1 to 12, which layer has C'z'/C'x' and C'z'/Cy' thermal diffusivity ratios of greater than 2,
- C'x, C'y' and C'z' being the thermal diffusivities measured at 25°C of the layer in the cured state respectively in the directions x', y' and z',
- x', y' and z' being directions orthogonal to one another, z' being the preferential direction of the carbon fibres.

16. Layer according to Claim 15, in which y' and z' define the midplane of the layer, x' is the direction orthogonal to the midplane (y'z').

17. Tread or tread portion of a tyre formed by the juxtaposition of layers, which layers are defined according to Claim 16, and are assembled along their faces perpendicular to the direction x', the direction z' coinciding with the radial direction of the tyre.

18. Tread or tread portion of a tyre according to Claim 17, in which x' coincides with the circumferential direction of the tyre.

19. Process for preparing a layer according to Claim 16, which comprises the following steps:
- mixing the elastomer matrix, the reinforcing filler, the ex-pitch carbon fibres, and where appropriate the plasticizer, in order to form a compound,
- calendering the compound in order to form a layer so as to orientate the ex-pitch carbon fibres in the calendering direction, z' coinciding with the calendering direction.
